# EUROPEAN PATENT SPECIFICATION

(11) **EP 4 461 996 B1**
(45) Date of publication and mention of the grant of the patent: **18.11.2026**
(21) Application number: 23172174.7
(22) Date of filing: 09.05.2023
(51) Int. Cl.: F16H 61/32, F16H 61/30, F16H 63/18, F16H 63/06, F16H 63/00

(54) **MODULAR SHIFTING SYSTEM**
MODULARES SCHALTSYSTEM
SYSTÈME DE CHANGEMENT DE VITESSE MODULAIRE

(43) Date of publication of application: 13.11.2024
(73) Proprietor: ArvinMeritor Technology, LLC, Troy, MI 48084 (US)
(72) Inventor: Hanneder, Michael, Troy, 48084 (US); Grünwald, Silvia, Troy, 48084 (US); Grosstesner, Christian, Troy, 48084 (US); Bernoegger, Johannes, Troy, 48084 (US)
(74) Representative: Whitfield, Jack Stephen

(56) References cited:
- WO-A1-2005/085683
- WO-A1-2015/144147
- DE-A1- 102016 006 751
- US-A- 5 842 947
- US-A1- 2023 075 508

## Description

### FIELD OF THE INVENTION

The present invention relates to a modular shifting system. In addition, the present invention relates to a pneumatically actuated shift device for the modular shifting system.

### BACKGROUND OF THE INVENTION

A shifting system includes a transmission providing different gear ratios between an output shaft and an input shaft and a shift device for shifting between the different gear ratios of the transmission. Generally, the use of both an electrically actuated shift device and a pneumatically actuated shift device for the shifting system is known. The selection of either the electrically actuated shift device or the pneumatically actuated shift device depends on various factors such as the intended use of the shifting system, customer requirements, etc. Due to the different designs and dimensions of the differently actuated shift devices, the selection of the shift device influences the design of the transmission (and/or the transmission housing), the required installation space of the transmission, and the arrangement of surrounding components, e.g., in a vehicle chassis or a vehicle body. The selection of the shift device must therefore be made early in the manufacturing process, which reduces the flexibility. Moreover, the selection of the shift device affects the design and arrangement of adjacent components, which increases the number of different components required and conflicts with the need to achieve the most efficient manufacturing process. In order to make the manufacturing process cost-effective, it is desirable to reduce the number of different components required.

Therefore, there is a need for a shifting system which provides a high degree of flexibility during the manufacturing process and can be manufactured more cost-effectively. Document WO2005/085683 discloses a gear selector for a transmission having a housing with multiple adjacent fluid chambers arranged about an axis. Fluid members actuate in these fluid chambers.

### TECHNICAL PROBLEMS TO BE SOLVED

In view of the above, it is the object of the present invention to provide a shifting system which has a high degree of flexibility during the manufacturing process and can be manufactured in a cost-effective manner.

### DISCLOSURE OF THE INVENTION

The object is achieved by a pneumatically actuated shift device for a modular shifting system according to to claim 1. Further advantageous developments are set out in the dependent claims.

In the modular shifting system according to dependent claim 5, since the electrically and the pneumatically actuated shift devices can be detachably attached to the transmission housing and are interchangeable with each other, the selection of the shift device does not affect the design of the transmission and/or the transmission housing of the shifting system. As a result, the number of different components required can be reduced, which makes the manufacturing process more cost-effective. Moreover, the selection of the shift device can be made later in the manufacturing process facilitating the adaption of the shifting system to customer and market requirements. Consequently, the manufacturing process can be made more flexible.

The dimensions of a housing of the electrically actuated shift device may substantially be equal to the dimensions of a housing of the pneumatically actuated shift device.

Therefore, an installation space required for the modular shifting system is independent of the shift device selection. As a result, the selection of the shift device does not affect the installation space of the modular shifting system and the influence on the arrangement of surrounding components, e.g., in a vehicle chassis or a vehicle body, can be reduced. This allows the selection of the shift device to be made later in the manufacturing process, making the manufacturing process more flexible.

The transmission may include a first shift fork axially shiftable by axially shifting a first follower and a second shift fork axially shiftable by axially shifting a second follower. The first follower and the second follower may be exposed to the outside of the transmission housing. Both the electrically actuated shift device and the pneumatically actuated shift device may include shifting means positioned so as to be able to axially shift the first follower and the second follower.

As a result, the selection of the shift device does not affect the design of the transmission of the shifting system, in particular, the design and the arrangement of the followers intended for the communication with the shift device. As a result, the number of different components required can be reduced, which makes the manufacturing process more cost-effective. Moreover, the manufacturing of the transmission is not affected by the selection of the shift device. Thus, the manufacturing process can be made more flexible.

Further benefits and advantages of the present invention will become apparent from the following detailed description of at least one exemplary embodiment for carrying out the present invention with reference to the accompanying drawings.

### BRIEF DESCRIPTION OF DRAWINGS

In the drawings:
Figure 1 is a schematic sectional view of a modular shifting system according to an embodiment of the present invention having an electrically actuated shift device attached to a transmission housing.
Figure 2 is a schematic sectional view of the modular shifting system of figure 1 having a pneumatically actuated shift device attached to the transmission housing.
Figure 3 is a partial schematic sectional view of the pneumatically actuated shift device of figure 2.

### DETAILED DESCRIPTION

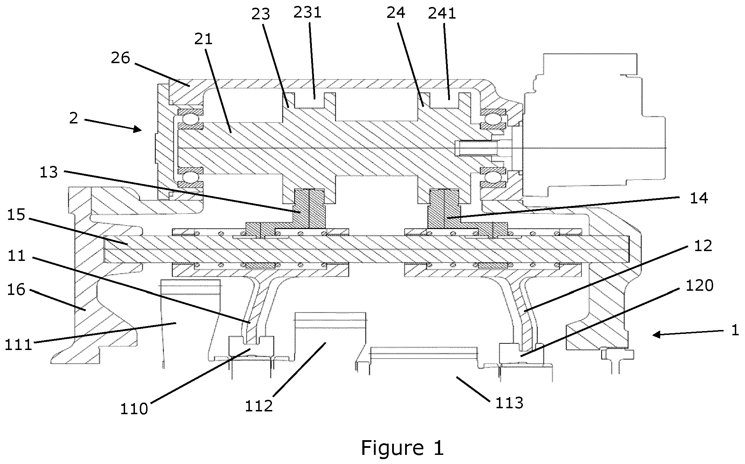

An embodiment of the present invention is described below with reference to figures 1 to 3.

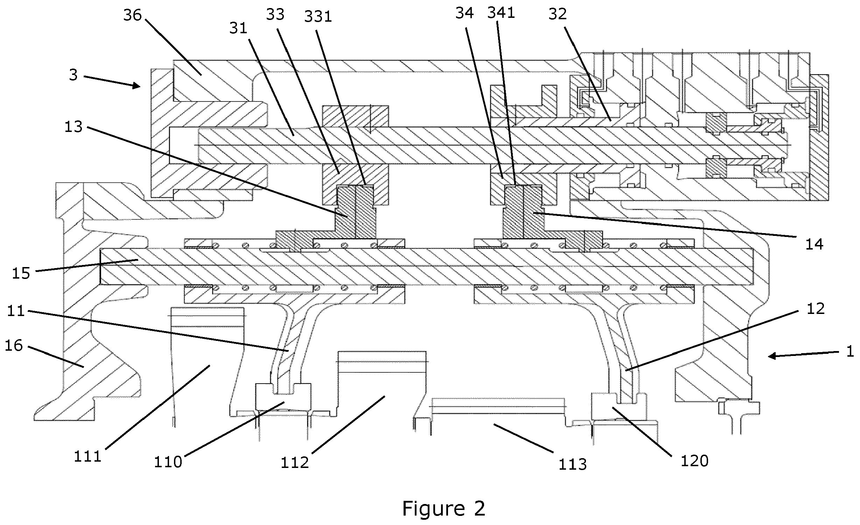

Figure 1 illustrates a schematic sectional view of the modular shifting system having an electrically actuated shift device 2 attached to a transmission housing 16. Figure 2 illustrates a schematic sectional view of the modular shifting system having a pneumatically actuated shift device 3 attached to a transmission housing 16.

The modular shifting system comprises a transmission 1. The transmission 1 includes an input shaft (not shown in the figures) configured to be connected to a drive source, such as an engine or motor, and an output shaft (not shown in the figures) configured to be connected to driven components, such as wheels of a vehicle. The input shaft and the output shaft are accommodated in and rotatably supported by the transmission housing 16.

The transmission 1 further includes multiple (three in the present embodiment shown in the figures) gear trains accommodated in the transmission housing 16 and selectively transmitting torque from the input shaft to the output shaft. Generally, the gear trains provide different gear ratios for establishing a transmission ratio between the output shaft and the input shaft. Each of the gear train is constituted, for example, by a gear provided on the input shaft and a gear provided on the output shaft meshing with the gear provided on the input shaft. The gear provided on the input shaft is axially fixed and rotatably supported on the input shaft. The gear can be rotationally locked to the input shaft by an engagement with a dog clutch provided on the input shaft. The dog clutch is rotationally locked to the input shaft but axially movable relative to the input shaft. Thus, the dog clutch is allowed to engage and disengage with the gear by axially reciprocating on the input shaft relative to the gear. An axial movement of the dog clutch is caused by a shift fork linked to the dog clutch. The shift fork is axially movably supported on a sliding rod 15. The shift fork is coupled to a follower via a spring mechanism (so called "blocker spring"). By axially shifting the follower, the shift fork is axially shifted, and the dog clutch coupled to the shift fork is engaged with or disengaged from the gear. The spring mechanism is capable to temporarily compensate the shifting movement of the follower when the dog clutch is prevented from shifting during the engagement process with the gear, for example, due to a tooth-to-tooth position with the gear, or during the disengagement process with the gear, for example, due to torque still acting on the engagement between the dog clutch and the gear. In this way, the spring mechanism serves to prevent overloading of an actuator that drives the axial movement of the follower.

According to the present exemplary embodiment shown in figure 1, the transmission 1 includes a first gear 111, a second gear 112, and a third gear 113. The first gear 111 and the second gear 112 can be rotationally locked to the input shaft by means of a first dog clutch 110. The third gear 113 can be rotationally locked to the input shaft by means of a second dog clutch 120. The first dog clutch 110 is linked to a first shift fork 11, and the second dog clutch 120 is linked to a second shift fork 12 axially movably supported on the sliding rod 15. The first shift fork 11 is axially shiftable by a first follower 13 supported on the sliding rod 15. The second shift fork 12 is axially shiftable by a second follower 14 supported on the sliding rod 15.

The first follower 13 and the second follower 14 are provided in the transmission housing 16 so as to be exposed to the outside of the transmission housing 16. Thus, the first and the second followers 13, 14 are axially shiftable by corresponding shifting means 23, 24, 33, 34 provided in the respective shift device 2, 3 attached to the transmission housing 16.

When the first follower 13 is axially shifted from a neutral position towards a first axial direction (i.e., to the left in figures 1 and 2), the first shift fork 11 is shifted towards the first axial direction thereby moving the first dog clutch 110 from a neutral position, in which the first dog clutch 110 is disengaged with the first and second gears 111, 112, to a first engaged position, in which the first dog clutch 110 is engaged with the first gear 111. When the first follower 13 is axially shifted from a neutral position towards a second axial direction (i.e., to the right in figures 1 and 2), the first shift fork 11 is shifted towards the second axial direction thereby moving the first dog clutch 110 from a neutral position, in which the first dog clutch 110 is disengaged with the first and second gears 111, 112, to a second engaged position, in which the first dog clutch 110 is engaged with the second gear 112. When the second follower 14 is axially shifted from a neutral position towards the first axial direction, the second shift fork 12 is shifted towards the first axial direction thereby moving the second dog clutch 120 from a neutral position, in which the second dog clutch 120 is disengaged with the third gear 113, to an engaged position, in which the second dog clutch 120 is engaged with the third gear 113.

As it is shown in figure 1, an electrically actuated shift device 2 can be attached to the transmission housing 16. The electrically actuated shift device 2 comprises an actuator, such as a stepper motor, which is capable of rotating a shifting shaft 21 of the shift device 2 by a specific rotation angle. The shifting shaft 21 is accommodated in and rotatably supported by a housing 26 of the shift device 2. The shifting shaft 21 is provided with a first shifting means 23 and a second shifting means 24. The first and second shifting means 23, 24 are formed in a disk-shaped manner protruding radially outwardly from the shifting shaft 21 and extending in a circumferential direction. Each of the shifting means 23, 24 comprises a circumferential recess 231, 241 radially recessed from a peripheral surface of the shifting means 23, 24 towards an axial center and extending in the circumferential direction. The circumferential recesses 231, 241 are formed to include inclined portions (not shown in the figures) that are inclined with respect to a plane perpendicular to the axial direction of the shifting shaft 21. The circumferential recesses 231, 241 of the first and the second shifting means 23, 24 are at least partially exposed to the outside through a correspondingly arranged opening in the housing 26 of the shift device 2.

The housing 26 of the electrically actuated shift device 2 can be fixed to the transmission housing 16 by fixing means such as screws. When the electrically actuated shift device 2 is attached to the transmission housing 16, the first follower 13 engages with the circumferential recess 231 of the first shifting means 23 and the second follower 14 engages with the circumferential recess 241 of the second shifting means 24. Therefore, when the first and second shifting means 23, 24 are rotated by actuation of the stepper motor, the first and second followers 13, 14 can be axially shifted by the inclined portions of the circumferential recesses 231, 241 engaged with the first and second followers 13, 14.

In the following, the shifting operation performed by the electrically actuated shift device 2 attached to the transmission housing 16 is described.

Figure 1 shows the electrically actuated shift device 2 in a neutral position. That is, the first and second shifting means 23, 24 engaged with the first and second followers 13, 14, are positioned such that the first dog clutch 110 is not engaged with the first and second gears 111, 112 and the second dog clutch 120 is not engaged with the third gear 113.

When a shifting command is issued, for example, by a driver of a vehicle provided with the modular shifting system, the stepper motor is actuated and rotates by a specific rotation angle in a specific rotation direction. The rotation of the stepper motor causes the shifting shaft 21 and the first and second shifting means 23, 24 to rotate by the specific rotation angle in the specific rotation direction. While the first and second shifting means 23, 24 rotate, the first and second followers 13, 14 slide within the respective recess of the first and second shifting means 23, 24. When, for example, the first follower 13 sliding within the recess of the first shifting means 23 reaches one of the inclined portions of the recess, the first follower 13 is axially shifted by the rotating first shifting means 23. Along with the first follower 13, the first shift fork 11 is axially shifted, thereby moving the first dog clutch 110, e.g., from the neutral position to the first engaged position in which the dog clutch engages with the first gear 111. Thus, by appropriately arranging inclined portions of the recesses of the first and second shifting means 23, 24, depending on a specific rotational position approached by the stepper motor, the first dog clutch 110 can be engaged with either the first gear 111 or the second gear 112, and the second dog clutch 120 can be engaged with the third gear 113.

As it is shown in figure 2, a pneumatically actuated shift device 3 can be attached to the transmission housing 16. Similar to the electrically actuated shift device 2, the pneumatically actuated shift device 2 also comprises a first shifting means 33 engaging with the first follower 13 of the transmission 1 and a second shifting means 34 engaging with the second follower 14 of the transmission 1. However, the shifting of the first and second followers 13, 14 is not caused by rotation but by axial translation of the first and second shifting means 33, 34 in the axial direction. In particular, the first and second shifting means 33, 34 of the pneumatically actuated shift device 3 are reciprocated in the axial direction.

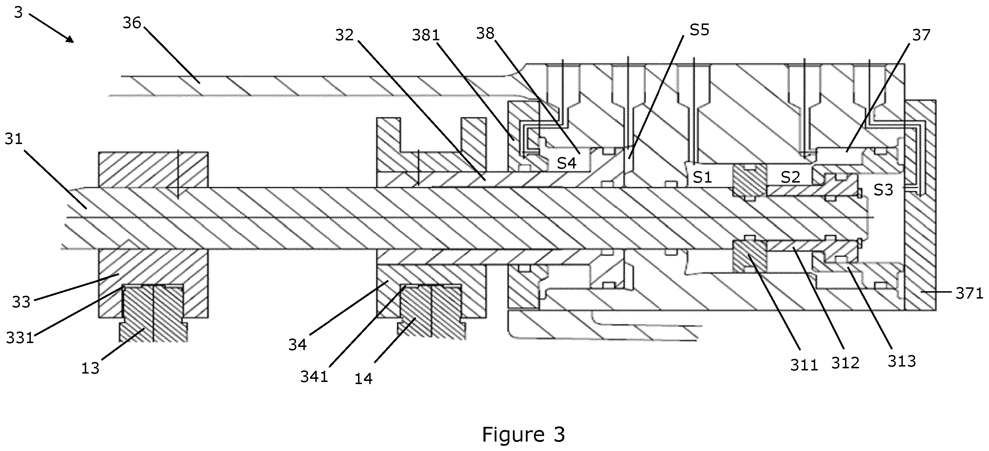

The pneumatically actuated shift device 3 includes a first shift rod 31 and a second shift rod 32. The first shift rod 31 is radially supported by a housing 36 of the pneumatically actuated shift device 3 so as to be slidably movable in an axial direction with respect to the housing 36. That is, the first shift rod 31 is shiftable in a first axial direction (e.g., to the left in figures 2 and 3) and in a second axial direction (e.g., to the right in figures 2 and 3) opposite to the first axial direction. The first shifting means 33 is fixed to the first shift rod 31 so as to move integrally with the first shift rod 31. The first shifting means 33 comprises a recessed portion 331 for engaging with the first follower 13.

The second shift rod 32 is radially supported by the first shift rod 31 so as to be slidably movable in the axial direction with respect to the housing 36 and the first shift rod 31. That is, the second shift rod 32 is shiftable in the first axial direction and in the second axial direction. In particular, the second shift rod 32 includes a central hollow portion penetrating the second shift rod 32 in the axial direction. The first shift rod 31 is inserted into the central hollow portion so as to axially penetrate the second shift rod 32. The second shifting means 34 is fixed to the second shift rod 32 so as to move integrally with the second shift rod 32. The second shifting means 34 comprises a recessed portion 341 for engaging with the second follower 14. The recessed portions 331, 341 of the first and the second shifting means 33, 34 are at least partially exposed to the outside through a correspondingly arranged opening in the housing 36 of the shift device 3. The housing 36 of the pneumatically actuated shift device 3 can be fixed to the transmission housing 16 by fixing means such as screws.

The housing 36 of the pneumatically actuated shift device 3 includes at an axial end portion in the second axial direction a first chamber 37 and a second chamber 38. The first chamber 37 is substantially formed as a blind hole opened in the second axial direction. The opening of the first chamber 37 is covered by a first cover 371 in an airtight manner. The second chamber 38 is substantially formed as a blind hole opened in the first axial direction. The opening of the second chamber 38 is covered by a second cover 381 in an airtight manner. A through hole extending in the axial direction is provided between the first chamber 37 and the second chamber 38. The first shift rod 31 is inserted into the through hole such that an axial end portion of the first shift rod 31 in the second axial direction is accommodated in the first chamber 37 and the first shift rod 31 passes through the second chamber 38 and a corresponding hole in the second cover 381.

The first shift rod 31 comprises a first piston member 311 and a second piston member 312, 313 arranged on the axial end portion of the first piston member 311 in the second axial direction. The first piston member 311 divides the first chamber 37 of the housing 36 into a first space S1 and a second space S2. The second piston member 312, 313 divides the first chamber 37 into the second space S2 and a third space S3. Pressurized air can be supplied to and discharged from the first space S1 by a first supply path, the second space S2 by a second supply path, and the third space S3 by a third supply path.

An axial end side of the first piston member 311 in the first axial direction abuts on a step provided on the first shift rod 31. An outer peripheral surface of the first piston member 311 slidably contacts an inner peripheral surface of the first chamber 37 so as to separate the first space S1 and the second space S2 in an airtight manner.

The second piston member 312, 313 comprises an inner piston element 312 and an outer piston element 313 positioned on a radially outer side of the inner piston element 312. The inner piston element 312 is substantially formed by a sleeve having a flange on the axial end side in the second axial direction projecting radially outward. The inner piston element 312 (in particular, an axially end surface of the inner piston element 312 in the first axial direction) abuts the first piston member 311. The first piston member 311 and the inner piston element 312 are axially fixed to the first shift rod 31 by, for example, a retaining ring. That is, the inner piston element 312 is sandwiched between the first piston member 311 and the retaining ring.

The outer piston element 313 is substantially formed by a sleeve having a flange on the axial end side in the second axial direction projecting radially outward and a ring-shaped hook portion on the axial end side in the first axial direction projecting radially inward. The inner piston element 312 is inserted into the outer piston element 313 such that an inner peripheral surface of the outer piston element 313 slides on an outer peripheral surface of the flange of the inner piston element 312 and an inner peripheral surface of the hook portion slides on an outer peripheral surface of the inner piston element 312. Thus, the axial movement of the outer piston element 313 in the second axial direction relative to the inner piston element 312 is restricted by the hook portion abutting the flange of the inner piston element 312. Further, the axial movement of the outer piston element 313 in the first axial direction relative to the inner piston element 312 is restricted by the hook portion abutting the first piston member 311 (the axial end side of the first piston member 311 in the second axial direction). An outer peripheral surface of the flange of the outer piston element 313 slidably contacts an inner peripheral surface of the first chamber 37 so as to separate the second space S2 and the third space S3 in an airtight manner.

The second shift rod 32 is substantially formed by a sleeve having a flange on the axial end side in the second axial direction projecting radially outward. An axial end portion of the second shift rod 32 in the second axial direction including the flange is inserted into the second chamber 38. The second shift rod 32 passes through the second cover 381 so that the axial end portion of the second shift rod 32 in the first axial direction projects from the second chamber 38. The second shifting means 34 is fixed to the axial end portion of the second shift rod 32 in the first axial direction projecting from the second chamber 38. An outer peripheral surface of the flange of the second shift rod 32 slidably contacts an inner peripheral surface of the second chamber 38 so as to divide the second chamber 38 into a fourth space S4 and a fifth space S5 and to separate the fourth space S4 and the fifth space S5 in an airtight manner. Pressurized air can be supplied to and discharged from the fourth space S4 by a fourth supply path and the fifth space S5 by a fifth supply path.

Figures 2 and 3 show the pneumatically actuated shift device 3 in a neutral position. That is, the first and second shifting means 33, 34 engaged with the corresponding one of the first and second followers 13, 14, are positioned such that the first dog clutch 110 is not engaged with the first and second gears 111, 113 and the second dog clutch 120 is not engaged with the third gear 113.

When the first shift rod 31 is in a position corresponding to the neutral position of the shift device 3, an axial end surface of the second piston member 312, 313 in the second axial direction, in particular, an axial end surface of the outer piston element 313 in the second axial direction, abuts the first cover 371 of the first chamber 37. At the same time, the hook portion of the outer piston element 313 abuts the flange of the inner piston element 312 (see figures 2 and 3).

When the second shift rod 32 is in a position corresponding to the neutral position of the shift device 3, the flange of the second shift rod 32, in particular, an axial end surface of the flange in the second axial direction, abuts an axial end surface of the second chamber 38.

When a shifting command is issued, for example, by a driver of a vehicle provided with the modular shifting system, pressurized air is supplied to one or more of the first to fifth spaces S1 to S5 via the supply paths, to shift the first and second shift rod 31, 32 in the axial direction. The supply of pressurized air is controlled, for example, by corresponding solenoid valves. The solenoid valves can be directly integrated on the housing 36 of the pneumatically actuated shift device 3.

When pressurized air is supplied to the third space S3 via the third supply path and the first and second spaces S2, S3 are unpressurized, an axial force in the first axial direction is exerted on the second piston member 312, 313. Thus, the first shift rod 31 is shifted in the first axial direction until the first piston member 311 abuts an axial end surface of the first chamber 37. Consequently, the first shifting means 33 fixed to the first shift rod 31 shifts the first follower 13 in the first axial direction. As a result, the first shift fork 11 of the transmission 1 is shifted in the first axial direction and the first dog clutch 110 is engaged with the first gear 111.

When pressurized air is supplied to the first space S1 via the first supply path and the second and third spaces S2, S3 are unpressurized, an axial force in the second axial direction is exerted on the first piston member 311. Thus, the first shift rod 31 is shifted in the second axial direction until the axial end surface of the first shift rod 31 in the second axial direction abuts the first cover 371 of the first chamber 37 or, as an alternative, an axial end surface of the first piston member 311 in the second axial direction abuts an axial end surface of the outer piston element 313 in the first axial direction. When the first shift rod 31 is shifted in the second axial direction, the inner piston element 312 of the second piston member 312, 313, which is fixed to the first shift rod 31, is axially moved relative to the outer piston element 313 abutting the first cover 371. Consequently, the first shifting means 33 fixed to the first shift rod 31 shifts the first follower 13 in the second axial direction. As a result, the first shift fork 11 of the transmission 1 is shifted in the second axial direction and the first dog clutch 110 is engaged with the second gear 112.

When pressurized air is supplied to the second space S2 via the second supply path and the first and third spaces S1, S3 are unpressurized, an axial force in the first axial direction is exerted on the first piston member 311 and an axial force in the second axial direction is exerted on the second piston member 312, 313, in particular, on the outer piston element 313 of the second piston member 312, 313. The axial force exerted on the first piston member 311 urges the first shift rod 31 in the first axial direction. The axial force exerted on the outer piston element 313 of the second piston member 312, 313 urges the outer piston element 313 in the second axial direction. Therefore, the outer piston element 313 is shifted relative to the inner piston element 312 until the hook portion of the outer piston element 313 abuts the flange of the inner piston element 312. When the hook portion of the outer piston element 313 abuts the flange of the inner piston element 312, the axial force exerted on the outer piston element 313 of the second piston member 312, 313 urges the first shift rod 31 in the second axial direction. Since the surface of the outer piston element 313 exposed to the pressure within the space S2 is larger than the surface of the first piston member 311 exposed to the pressure within the space S2, the axial force urging the first shift rod 31 to the second axial direction is larger than the axial force urging the first shift rod 31 to the first axial direction. As a result, the first shift rod 31 is returned to the position corresponding to the neutral position of the shift device 3 and the first dog clutch 110 is disengaged with the first gear 111 or the second gear 112.

When pressurized air is supplied to the fifth space S5 via the fifth supply path and the fourth space S4 is unpressurized, an axial force in the first axial direction is exerted on the flange of the second shift rod 32. Thus, the second shift rod 32 is shifted in the first axial direction until the flange abuts the second cover 381 of the second chamber 38. Consequently, the second shifting means 34 fixed to the second shift rod 32 shifts the second follower 14 in the first axial direction. As a result, the second shift fork 12 of the transmission 1 is shifted in the first axial direction and the second dog clutch 120 is engaged with the third gear 113.

When pressurized air is supplied to the fourth space S4 via the fourth supply path and the fifth space S5 is unpressurized, an axial force in the second axial direction is exerted on the flange of the second shift rod 32. Thus, the second shift rod 32 is shifted in the second axial direction until the flange abuts the axial end surface of the second chamber 38. As a result, the second shift rod 32 is returned to the position corresponding to the neutral position of the shift device 3 and the second dog clutch 120 is disengaged with the third gear 113.

Due to the arrangement and operation of the first and second shift rods 31, 32 described above, the pneumatically actuated shift device 3 can be made very compact in size. Thus, a size of the housing 36 of the pneumatically actuated shift device 3 can be achieved which substantially corresponds to a size of the housing 26 of the electrically actuated shift device 2. Moreover, the first and second shifting means 33, 34 can be positioned corresponding to the first and second shifting means 23, 24 of the electrically actuated shift device 2, i.e., along an axial direction. Thus, the first and second followers 13, 14 of the transmission 1 can be moved axially both by the rotation of the shifting shaft 21 of the electrically actuated shift device 2 with only one actuator (e.g., the stepper motor) and by the pneumatically actuated first and second shift rods 31, 32. Therefore, it is not necessary to adapt the transmission 1, in particular the first and second followers 13, 14 of the transmission 1, to the respective shift device 2, 3.

The above-described embodiments of the present invention can be appropriately modified or combined. The above description is not exhaustive, and the present invention is not limited to the above embodiments. The skilled person will recognize that various modifications and combinations of the features included in the above embodiments are possible within the scope of the invention, as defined in the claims.

## Claims

1. Pneumatically actuated shift device (3) for a modular shifting system, comprising
a housing (36) detachably attachable to a transmission housing (16) of a transmission (1) of the modular shifting system,
a first pneumatically actuated shift rod (31) configured to reciprocate in an axial direction and accommodated in the housing (36),
a second pneumatically actuated shift rod (32) configured to reciprocate in the axial direction and accommodated in the housing (36), wherein
the first shift rod (31) is coupled to a first shifting means (33) configured to shift a first follower (13) of the transmission (1),
the second shift rod (32) is coupled to a second shifting means (34) configured to shift a second follower (14) of the transmission (1),
the first shift rod (31) and the second shift rod (32) are co-axial.

2. . Pneumatically actuated shift device according to claim 1, wherein the first shift rod (31) axially penetrates the second shift rod (32).

3. . Pneumatically actuated shift device according to claim 1 or 2, wherein
the first shift rod (31) is radially supported by the housing (36) so as to be slidably movable in the axial direction with respect to the housing (36),
the second shift rod (32) is radially supported by the first shift rod (31) so as to be slidably movable in the axial direction with respect to the housing (36) and with respect to the first shift rod (31).

4. . Pneumatically actuated shift device according to any one of claims 1 to 3, wherein the first shift rod (31) and the second shift rod (32) are axially movable independently of each other.

5. . Modular shifting system, comprising a transmission (1) including an input shaft and an output shaft, a transmission housing (16), gear trains accommodated in the transmission housing (16) and constituting at least two shiftable gear ratios for establishing a transmission ratio between the output shaft and the input shaft, a pneumatically actuated shift device (3) according to claim 1, for shifting between the at least two gear ratios, wherein the pneumatically actuated shift device (3) is detachably attachable to the transmission housing (16), and the modular shifting system is configured such that an electrically actuated shift device (2), also detachably attachable to the transmission housing (16), is interchangeable with the pneumatically actuated shift device (3) and vice versa.

6. . Modular shifting system according to claim 5, wherein the dimensions of a housing (26) of the electrically actuated shift device (2) are substantially equal to the dimensions of a housing (36) of the pneumatically actuated shift device (3).

7. . Modular shifting system according to claim 5 or 6, wherein the transmission (1) includes a first shift fork (11) axially shiftable by axially shifting a first follower (13) and a second shift fork (12) axially shiftable by axially shifting a second follower (14), the first follower (13) and the second follower (14) are exposed to the outside of the transmission housing (16), and both the electrically actuated shift device (2) and the pneumatically actuated shift device (3) include shifting means (23, 24, 33, 34) positioned so as to be able to axially shift the first follower (13) and the second follower (14).

## Patentansprüche

1. Pneumatisch betätigte Schaltvorrichtung (3) für ein modulares Schaltsystem, umfassend
ein Gehäuse (36), das lösbar an ein Getriebegehäuse (16) eines Getriebes (1) des modularen Schaltsystems angebracht werden kann,
eine erste pneumatisch betätigte Schaltstange (31), die dazu konfiguriert ist, sich in einer Axialrichtung hin- und herzubewegen, und im Gehäuse (36) untergebracht ist,
eine zweite pneumatisch betätigte Schaltstange (32), die dazu konfiguriert ist, sich in der Axialrichtung hin- und herzubewegen, und im Gehäuse (36) untergebracht ist, wobei
die erste Schaltstange (31) mit einem ersten Schaltmittel (33) gekoppelt ist, das dazu konfiguriert ist, einen ersten Stößel (13) des Getriebes (1) zu schalten,
wobei die zweite Schaltstange (32) mit einem zweiten Schaltmittel (34) gekoppelt ist, das dazu konfiguriert ist, einen zweiten Stößel (14) des Getriebes (1) zu schalten,
die erste Schaltstange (31) und die zweite Schaltstange (32) koaxial sind.

2. Pneumatisch betätigte Schaltvorrichtung nach Anspruch 1, wobei die erste Schaltstange (31) die zweite Schaltstange (32) axial durchdringt.

3. Pneumatisch betätigte Schaltvorrichtung nach Anspruch 1 oder 2, wobei
die erste Schaltstange (31) radial von dem Gehäuse (36) gestützt wird, sodass sie in der Axialrichtung in Bezug auf das Gehäuse (36) gleitend beweglich ist,
die zweite Schaltstange (32) radial von der ersten Schaltstange (31) gestützt wird, sodass sie in der Axialrichtung in Bezug auf das Gehäuse (36) und in Bezug auf die erste Schaltstange (31) gleitend beweglich ist.

4. Pneumatisch betätigte Schaltvorrichtung nach einem der Ansprüche 1 bis 3, wobei die erste Schaltstange (31) und die zweite Schaltstange (32) unabhängig voneinander axial beweglich sind.

5. Modulares Verschiebesystem, umfassend ein Getriebe (1), das eine Eingangswelle und eine Abtriebswelle, ein Getriebegehäuse (16), Rädergetriebe, die im Getriebegehäuse (16) untergebracht sind und mindestens zwei verschiebbare Übersetzungsverhältnisse zum Einstellen eines Getriebeverhältnisses zwischen der Abtriebswelle und der Eingangswelle bildet, eine pneumatisch betätigte Schaltvorrichtung (3) nach Anspruch 1 zum Umschalten zwischen den mindestens zwei Übersetzungsverhältnissen, beinhaltet, wobei die pneumatisch betätigte Schaltvorrichtung (3) abnehmbar am Getriebegehäuse (16) befestigt werden kann und das modulare Schaltsystem dazu konfiguriert ist, wobei eine elektrisch betätigte Schaltvorrichtung (2), die ebenfalls abnehmbar am Getriebegehäuse (16) befestigt werden kann, mit der pneumatisch betätigten Schaltvorrichtung (3) austauschbar ist und umgekehrt.

6. Modulares Schaltsystem nach Anspruch 5, wobei die Abmessungen eines Gehäuses (26) der elektrisch betätigten Schaltvorrichtung (2) im Wesentlichen den Abmessungen eines Gehäuses (36) der pneumatisch betätigten Schaltvorrichtung (3) entsprechen.

7. Modulares Schaltsystem nach Anspruch 5 oder 6, wobei das Getriebe (1) eine erste Schaltgabel (11), die durch axiales Schalten eines ersten Stößels (13) axial schaltbar ist, und eine zweite Schaltgabel (12), die durch axiales Schalten eines zweiten Stößels (14) axial schaltbar ist, beinhaltet, wobei der erste Stößel (13) und der zweite Stößel (14) außerhalb des Getriebegehäuses (16) freiliegen und sowohl die elektrisch betätigte Schaltvorrichtung (2) als auch die pneumatisch betätigte Schaltvorrichtung (3) Schaltmittel (23, 24, 33, 34) beinhalten, die so positioniert sind, dass sie den ersten Stößel (13) und den zweiten Stößel (14) axial schalten können.

## Revendications

1. Dispositif de changement de vitesse à actionnement pneumatique (3) pour un système de changement de vitesse modulaire, comprenant
un boîtier (36) pouvant être fixé de manière amovible à un carter de boîte de vitesses (16) d'une boîte de vitesses (1) du système de changement de vitesse modulaire,
une première tige de changement de vitesse à actionnement pneumatique (31) conçue pour effectuer un mouvement de va-et-vient dans une direction axiale et logée dans le boîtier (36),
une seconde tige de changement de vitesse à actionnement pneumatique (32) conçue pour effectuer un mouvement de va-et-vient dans la direction axiale et logée dans le boîtier (36), dans lequel
la première tige de changement de vitesse (31) est couplée à un premier moyen de changement de vitesse (33) conçu pour déplacer un premier suiveur (13) de la boîte de vitesses (1),
la seconde tige de changement de vitesse (32) est couplée à un second moyen de changement de vitesse (34) conçu pour déplacer un second suiveur (14) de la boîte de vitesses (1),
la première tige de changement de vitesse (31) et la seconde tige de changement de vitesse (32) sont coaxiales.

2. Dispositif de changement de vitesse à actionnement pneumatique selon la revendication 1, dans lequel la première tige de changement de vitesse (31) pénètre axialement dans la seconde tige de changement de vitesse (32).

3. Dispositif de changement de vitesse à actionnement pneumatique selon la revendication 1 ou 2, dans lequel
la première tige de changement de vitesse (31) est supportée radialement par le boîtier (36) de manière à pouvoir coulisser dans la direction axiale par rapport au boîtier (36),
la seconde tige de changement de vitesse (32) est supportée radialement par la première tige de changement de vitesse (31) de manière à pouvoir coulisser dans la direction axiale par rapport au boîtier (36) et par rapport à la première tige de changement de vitesse (31).

4. Dispositif de changement de vitesse à actionnement pneumatique selon l'une quelconque des revendications 1 à 3, dans lequel la première tige de changement de vitesse (31) et la seconde tige de changement de vitesse (32) sont mobiles axialement indépendamment l'une de l'autre.

5. Système de changement de vitesse modulaire, comprenant une boîte de vitesses (1) incluant un arbre d'entrée et un arbre de sortie, un carter de boîte de vitesses (16), des trains d'engrenages logés dans le carter de boîte de vitesses (16) et constituant au moins deux rapports de vitesse commutables pour établir un rapport de transmission entre l'arbre de sortie et l'arbre d'entrée, un dispositif de changement de vitesse à actionnement pneumatique (3) selon la revendication 1, pour changer de rapport entre les au moins deux rapports de vitesse, dans lequel le dispositif de changement de vitesse à actionnement pneumatique (3) peut être fixé de manière amovible au carter de boîte de vitesses (16), et le système de changement de vitesse modulaire est conçu de telle sorte qu'un dispositif de changement de vitesse à actionnement électrique (2), pouvant être également fixé de manière amovible au carter de boîte de vitesses (16), est interchangeable avec le dispositif de changement de vitesse à actionnement pneumatique (3) et vice versa.

6. Système de changement de vitesse modulaire selon la revendication 5, dans lequel les dimensions d'un boîtier (26) du dispositif de changement de vitesse à actionnement électrique (2) sont sensiblement égales aux dimensions d'un boîtier (36) du dispositif de changement de vitesse à actionnement pneumatique (3).

7. Système de changement de vitesse modulaire selon la revendication 5 ou 6, dans lequel la boîte de vitesses (1) inclut une première fourchette de changement de vitesse (11) déplaçable axialement par déplacement axial d'un premier suiveur (13) et une seconde fourchette de changement de vitesse (12) déplaçable axialement par déplacement axial d'un second suiveur (14), le premier suiveur (13) et le second suiveur (14) étant exposés à l'extérieur du carter de boîte de vitesses (16), et le dispositif de changement de vitesse à actionnement électrique (2) ainsi que le dispositif de changement de vitesse à actionnement pneumatique (3) incluant tous deux des moyens de changement de vitesse (23, 24, 33, 34) positionnés de manière à pouvoir déplacer axialement le premier suiveur (13) et le second suiveur (14).
